# EUROPEAN PATENT SPECIFICATION

(11) **EP 1 457 363 B1**
(45) Date of publication and mention of the grant of the patent: **22.11.2006**
(21) Application number: 03100659.6
(22) Date of filing: 14.03.2003
(51) Int. Cl.: B60H 1/00

(54) **Air-heating module**
Heizanlage
Module de chauffage

(43) Date of publication of application: 15.09.2004
(73) Proprietor: Delphi Technologies, Inc., Troy, MI 48007 (US)
(72) Inventor: Heys, Malcolm S., 8053 Bertrange (LU); Vankan, Joseph MG., 57840 Ottange (FR)
(74) Representative: Beissel, Jean

(56) References cited:
- DE-A- 10 121 286
- FR-A- 2 712 538
- PATENT ABSTRACTS OF JAPAN vol. 2002, no. 03, 3 April 2002 (2002-04-03) -& JP 2001 315521 A (ZEXEL VALEO CLIMATE CONTROL CORP), 13 November 2001 (2001-11-13)

## Description

### Field of the invention

The present invention generally relates to an air-heating module, in particular to an air-heating module for an automotive vehicle.

### Background of the invention

Air-heating modules comprise a number of ducts for leading air therethrough. Usually a blower fan is arranged near an air inlet of the air-heating module to draw air from the atmosphere and blow it through the air-heating module. Generally, a heater core is arranged in a heating duct for heating the air passing therethrough. Such heater cores normally have an uninterrupted flow of hot engine coolant therethrough. In order to regulate the temperature of the air exiting the air-heating module via an air outlet port, the air-heating module comprises a bypass duct for bypassing the heating duct. A closing element is arranged either upstream or downstream of the ducts to regulate the airflow through the heating and bypass ducts.

In a first end position of the closing element, the latter blocks the bypass duct such that essentially the whole airflow is directed through the heating duct and the heater core, thereby achieving maximum heating effect. In a second end position of the closing element, the latter blocks the heating duct such that essentially the whole airflow is directed through the bypass duct, thereby bypassing the heater core and achieving minimum heating effect. In intermediate positions, part of the airflow is directed through the heating duct while the other part of the airflow is directed through the bypass duct, thereby regulating the temperature of the air exiting the air-heating module.

When the closing element is in its second end position, i.e. when minimum heating effect is desired, essentially the whole airflow is directed through the bypass duct and bypasses the heating duct and the heater core. However, on the side of the heater core facing away from the closing element, air penetrates into the heating duct and a vortex is created. Due to this vortex, air scrubs against one of the surfaces of the heater core and, as the heater core is always hot, this causes the air to heat up. Such a heat pick-up will typically result in the temperature of the air exiting the air-heater module via the air outlet to increase; normally by about 0.5 to 5°C. This is not desired and systems to reduce the heat pick-up have been proposed.

A further closing element can e.g. be arranged in the air-heating module, such that the heating duct can be sealed off both upstream and downstream of the heater core. This allows the airflow to stay out of the heating duct and away from the heater core. However, the addition of such a further closing element, including associated mechanisms, adds further components to the air-heating module, thereby increasing the weight, the complexity and the cost of the air-heating module.

Another solution is to turn the heater core off when minimal heating effect is desired. A water valve or slave valve can be arranged in the circuit delivering hot engine coolant to the heater core. These valves allow turning off the supply of hot engine coolant to the heater core, thereby reducing the heat pick-up. However, such valves are rather expensive and add weight and complexity.

DE 101 21 286 discloses an air-heating module, in particular for an automotive vehicle, comprising a heating duct between an air inlet and an air outlet, the heating duct comprising a heater core therein for heating air passing therethrough. The module further comprises a bypass duct for bypassing the heating duct and a closing element for at least partially blocking at least one of the heating duct and the bypass duct. A flow control structure with a front face and a rear face is provided with the rear face arranged substantially parallel to a first surface of the heater core. The flow control structure comprises a plurality of elongate passages extending from the front face to the rear face, in a direction substantially perpendicular to the rear face, to allow air to flow, with minimal obstruction, through the flow control structure in a direction perpendicular to the rear face.

### Object of the invention

The object of the present invention is to propose a simpler solution to reduce heat pick-up in an air-heating module, Such a solution is given by an air-heating module as claimed in claim 1.

### Summary of the invention

According to the invention, an air-heating module, in particular for an automotive vehicle, comprises an air inlet and an air outlet; a heating duct between the air inlet and the air outlet, the heating duct comprising a heater core therein for heating air passing through the heater core; a bypass duct between the air Inlet and the air outlet for bypassing the heating duct; and a closing element for at least partially blocking at least one of the heating duct and the bypass duct; and a flow control structure having a front face and a rear face, the rear face being arranged substantially parallel to a first surface of the heater core facing an open end of the heating duct and a plurality of passages extending from the front face to the rear face. According to an important aspect of the invention, the passages have a depth equal to or greater than their width, extend in a direction substantially perpendicular to the rear face, and allow air to flow, with minimal obstruction, through said flow control structure in a direction perpendicular to said rear face.

When the heating duct is closed off at one end by means of the closing element, the flow control structure keeps air circulating in a main vortex in the open end of the heating duct away from the heater core itself. A smaller vortex - or smaller vortexes - may collect in the passages creating an insulating effect between the heater core and the bypassing air. The flow control structure only allows air directed onto the front face of the flow control structure in an essentially perpendicular direction to pass through the passages of the flow control structure. Air impinging on the front face of the flow control structure at an angle, such as is the case when a vortex is present, cannot directly pass through the passages and can hence not scrub the surface of the heater core. The contact of air with the heater core is hence reduced and less heat is transferred from the heater core to the air. Heat pick-up is thus reduced, i.e. air penetrating the heating duct through its open end is heated up less than in conventional air-heating modules due to the flow control structure.

When the heating duct is open at both ends, air can flow through the heating duct. The air now impinges on the front face of the flow control structure in an essentially perpendicular direction and passes through the passages and through the heater core whereby the air is heated. The flow control structure is preferably designed so as to cause minimal obstruction.

The flow control structure comprises fixing means for fixing the rear face of the flow control structure against the first surface of the heater core. The fixing means, such as e.g. pegs, brackets or clips can engage between the elements of the heater core or embrace the heater core. It is also worth noting that the flow control structure can be fitted in many air-heating modules and that existing air-heating modules can easily be retrofitted with such a flow control structure.

Preferably, the flow control structure is a grid comprising a plurality of parallel bars in a first direction and parallel bars in a second direction, the first direction not being parallel to the second direction, wherein the passages are formed between the parallel bars. A flow control structure with a plurality of passages of diamond shaped cross-section can thereby easily be formed. The first direction can be perpendicular to the second direction so that passages of rectangular or square cross-section can be formed. The grid can also comprise a plurality of parallel bars in a third direction, the third direction not being parallel to the first or second directions so as to form passages of triangular cross-section. Such a grid can easily be produced, e.g. through extrusion or moulding processes.

The flow control structure can also be a solid block having the passages extending therethrough. The passages can e.g. be bored through the solid block in order to form the flow control structure. Passages with round or hexagonal cross-section can thereby be formed.

Alternatively, a plurality of tubes can be arranged side-by-side so as to form the flow control structure. The tubes can e.g. have round or hexagonal cross-section.

The passages can have a width between 2 and 100 mm, preferably between 5 and 30 mm and a depth between 2 and 100 mm, preferably between 5 and 20 mm.

Advantageously, the passages are elongate passages, i.e. their depth is larger than their width. This helps to further break down the vortex and further reduce heat transfer when the heating duct is closed off. Furthermore, the passages can be curved or angled, which can improve airflow through the flow control structure and the heater core when the heating duct is open.

The flow control structure is advantageously made of heat insulating material. This ensures that the heat transfer from the rear face of the flow control structure, which is in contact with or in close proximity to the heater core, to the front face of the flow control structure, which is in contact with the circulating air, is minimized. By minimizing the heat transfer from the rear face to the front face, the heat pick-up of the air in contact with the front face is reduced.

It will be appreciated that the closing element can be arranged either upstream or downstream of the heater core and the flow control structure is arranged on a surface of the heater core turned away from the closing element.

### Brief description of the drawings

The present invention will now be described, by way of example, with reference to the accompanying drawings, in which:
- Fig.1:: is a schematic view through an air-heating module according to the invention in a first operating mode;
- Fig.2:: is a section view through the air-heating module of Fig.1 in a second operating mode;
- Fig.3:: is a perspective view of a flow control structure and a heater core of the air-heating module of Fig.1;
- Fig.4:: is a schematic front view of a front face of a flow control structure according to second, third, fourth and fifth embodiments.

### Detailed description of a preferred embodiment

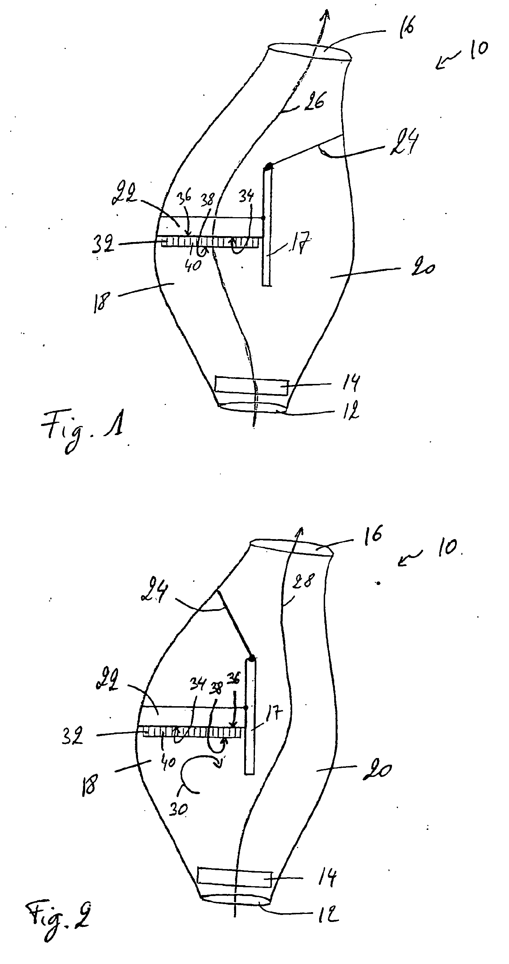

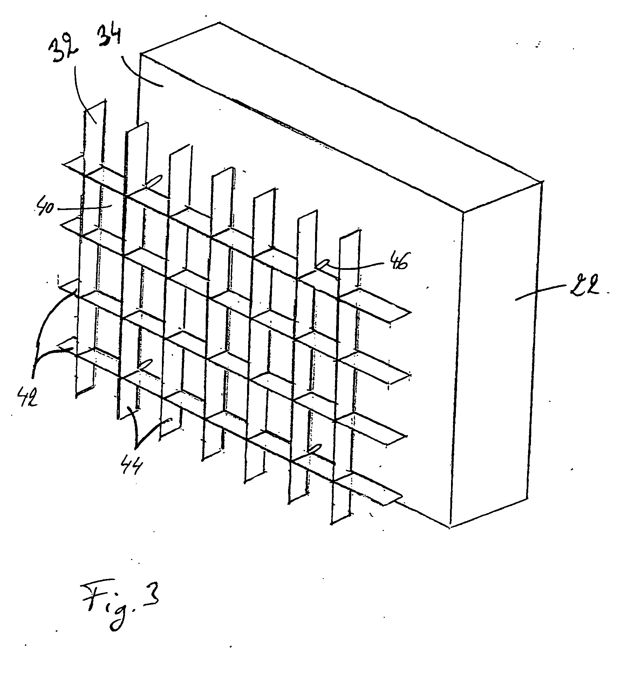

An air-heating module 10 is schematically represented in Figs 1 and 2. Such an air-heating module 10 comprises an air inlet 12 through which air is drawn into the air-heating module 10, generally by means of a blower 14. The air-heating module 10 further comprises an air outlet 16 for delivering air to a passenger compartment of an automotive vehicle. A partition wall 17 is arranged between the air inlet 12 and the air outlet 16 so as to form a heating duct 18 and a bypass duct 20. Within the heating duct 18, a heater core 22 is arranged for heating the air passing therethrough. A closing element 24, such as e.g. a flap, is arranged in the air-heating module 10 for at least partially blocking the flow of air through either the heating duct 18 or the bypass duct 20. By means of the closing element 24, the airflow can hence be directed through the heating duct 18, through the bypass duct 20 or through both.

Fig.1 shows a first operating mode of the air-heating module 10, wherein the closing element 24 is in a first end position and closes one end of the bypass duct 20. Essentially the whole of the airflow is then directed through the heating duct 18, as represented by arrow 26. As essentially the whole of the airflow flows through the heater core 22, maximum heating effect is achieved.

Fig.2 shows a second operating mode of the air-heating module 10, wherein the closing element 24 is in a second end position and closes one end of the heating duct 18. Essentially the whole of the airflow is now directed through the bypass duct 20, as represented by arrow 28. As essentially none of the airflow flows through the heater core 22, minimum heating effect is achieved.

The closing element 24 can also be placed in intermediate positions between the first and second end positions, thereby only partially closing one end of at least one of the heating and bypass ducts 18, 20. Part of the airflow is then directed through the heating duct 18 and heated, while the other part of the airflow is directed through the bypass duct 20 and not heated. Downstream of the heating or bypass ducts 18, 20, the heated air is mixed with the unheated air before it exits the air-heating module 10 via the air outlet 16. The temperature of the air exiting the air-heating module 10 can thereby be regulated.

Due to the fact that only one closing element 24 is used to close off one of the ducts 18, 20, a vortex can form in the open end of the closed off duct. In the second operating mode, as shown in Fig.2, a vortex, represented by arrow 30, is then formed in the space in front of the heater core 22. Due to this vortex 30 in the open end of the heating duct 18, the air is allowed to scrub a first surface 34 of the heater core 22.

A flow control structure 32 is arranged in front of the first surface 34 of the heater core 22 to prevent the air from reaching the heater core 22. The flow control structure 32 comprises a rear face 36 directed towards the first surface 34 of the heater core 22 and a front face 38 directed towards the open end of the heating duct 18. The flow control structure 32 further comprises a plurality of passages 40 extending from the front face 38 to the rear face 36 in a substantially perpendicular direction. The flow control structure 32 allows only air directed onto the front face 38 of the flow control structure 32 in an essentially perpendicular direction to pass through the flow control structure 32. Air impinging on the front face 38 of the flow control structure 32 at an angle, such as is the case when a vortex is present, cannot pass through the passages 40 of the flow control structure 32.

Therefore, on the one hand, when the air-heating module 10 operates in its first operating mode, the flow control structure 32 allows air to flow through the passages 40 and through the heater core 22, thereby heating the air flowing through the air-heating module 10. The flow control structure 32 is preferably designed so as to cause minimal obstruction. On the other hand, when the air-heating module 10 operates in its second operating mode, the flow control structure 32 keeps the air circulating in the open end of the heating duct 18 away from the heater core 22. Direct contact of the air with the heater core 22 is avoided and heat pick-up is reduced.

A first embodiment of the flow control structure 32 can be explained in more detail by referring to Fig.3, which schematically shows a heater core 22 and a flow control structure 32. The flow control structure 32 of this embodiment is a grid comprising a first set of parallel bars 42 in a first direction and a second set of parallel bars 44 in a second direction. The first and second directions are perpendicular to each other so that passages 40 of rectangular or square cross-section are formed between the bars. Fixing means 46, such as pegs, brackets or clips, can be provided on the rear face 36 of the flow control structure 32 in order to attach the latter to the heater core 22. The pegs, brackets or clips can e.g. engage between the elements of the heater core 22 or embrace the latter.

The passages have a width between 2 and 100 mm, preferably between 5 and 30 mm and a depth between 2 and 100 mm, preferably between 5 and 20 mm. Advantageously, the passages are elongate passages, i.e. their depth is larger than their width. This helps to further break down the vortex and further reduce heat transfer when the heating duct 18 is closed off. Furthermore, the passages can be curved or angled, which can improve air flow through the flow control structure 32 and the heater core 22 when the heating duct 18 is open.

According to one embodiment, a flow control structure having a grid with passages having a width of 10 mm and a depth of 10 mm was produced of plastic. This grid was attached to the first surface of the heater core. By using such a grid, a reduction in heat pick-up of 50% was achieved. It will be understood that the reduction of heat pick-up depends on the width and the depth of the passages, of the material used and of the layout of the air-heating module.

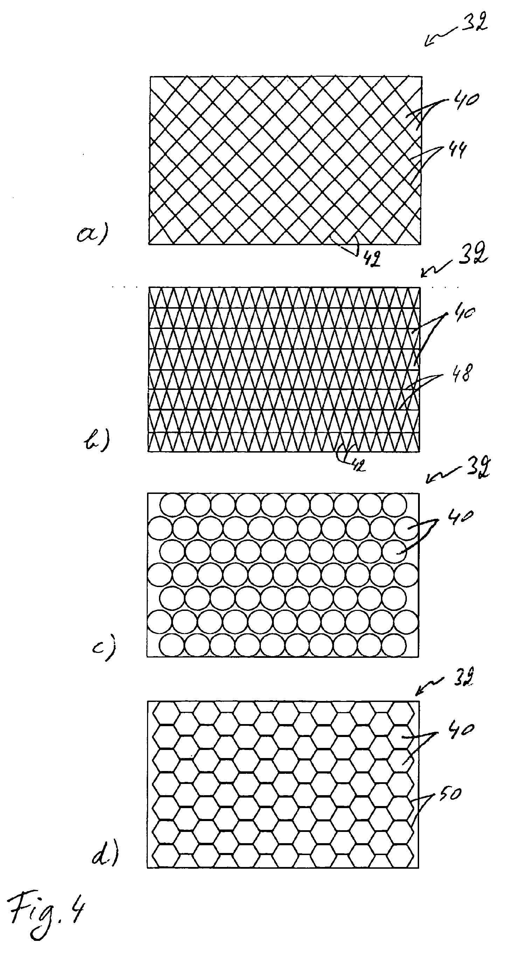

Other embodiments of the flow control structure 32 are shown in Fig.4. According to a second embodiment, as shown in Fig.4a, the first and second directions are not perpendicular to each other so that passages 40 of diamond-shaped cross-section are formed between the bars 42, 44. According to a third embodiment shown in Fig.4b, the flow control structure 32 comprises a third set of parallel bars 48 in a third direction, wherein the third direction is not parallel to the first and second directions. Passages 40 having triangular cross-section can then be formed between the bars 42, 44, 48.

According to a fourth embodiment, shown in Fig.4c, the passages 40 have a round cross-section. Such a flow control structure 32 can e.g. be formed by providing a solid block of material and drilling the passages therethrough.

A fifth embodiment is shown in Fig.4d, wherein a plurality of tubes 50 having hexagonal cross-section have been arranged side by side and connected together so as to form the flow control structure 32.

The flow control structure 32 is preferably made of heat insulating material so that heat transfer from the rear face 36 to the front face 34 is kept to a minimum.

It will also be understood that the closing element can be arranged either upstream or downstream of the heater core. In Figs 1 and 2, the closing element is arranged downstream of the heater core, i.e. between the heater core and the outlet end. The flow control structure 32 is then provided on the first surface of the heater core, facing the air inlet. If the closing element is arranged upstream of the heater core, i.e. between the heater core and the inlet end, the flow control structure 32 is provided on a second surface 50 of the heater core, facing the air outlet.

### Reference signs

- 10: air-heating module
- 12: air inlet
- 14: blower
- 16: air outlet
- 17: partition wall
- 18: heating duct
- 20: bypass duct
- 22: heater core
- 24: closing element
- 26: arrow
- 28: arrow
- 30: arrow
- 34: first surface
- 32: flow control structure
- 36: rear face
- 38: front face
- 40: passage
- 42: parallel bar in a first direction
- 44: parallel bar in a second direction
- 46: fixing means
- 48: parallel bar in a third direction
- 50: tube

## Claims

1. Air-heating module (10), in particular for an automotive vehicle, comprising:
an air inlet (12) and an air outlet (16);
a heating duct (18) between said air inlet (12) and said air outlet (16), said heating duct (18) comprising a heater core (22) therein for heating air passing through said heater core (22);
a bypass duct (20) between said air inlet (12) and said air outlet (16) for bypassing said heating duct (18);
a closing element (24) for at least partially blocking at least one of said heating duct (18) and said bypass duct (20);
a flow control structure (32) having a front face (38), a rear face (36), said rear face (36) being arranged substantially parallel to a first surface (34) of said heater core (22) facing an open end of said heating duct (18), and
a plurality of passages (40) extending from said front face (38) to said rear face (36), wherein said passages (40) have a depth equal to or greater than their width, extend in a direction substantially perpendicular to said rear face (36), and allow air to flow, with minimal obstruction, through said flow control structure (32) in a direction perpendicular to said rear face (36)
**characterised in that**
said flow control structure (32) comprises fixing means (46) for fixing said rear face (36) of said flow control structure (32) against said first surface (34) of said heater core (22).

2. Air-heating module according to claim 1, wherein said flow control structure (32) is a grid comprising a plurality of parallel bars in a first direction (42) and parallel bars in a second direction (44), said first direction not being parallel to said second direction, wherein said passages (40) are formed between said parallel bars (42, 44).

3. Air-heating module according to claim 2, wherein said first direction is perpendicular to said second direction.

4. Air-heating module according to claim 2 or 3, wherein said grid (32) comprises a plurality of parallel bars in a third direction (48), said third direction not being parallel to said first or second directions.

5. Air-heating module according to claim 1, wherein said flow control structure (32) is a solid block having said passages extending therethrough.

6. Air-heating module according to claim 1, wherein said flow control structure (32) is formed from a plurality of tubes (50) arranged side-by-side.

7. Air-heating module according to any of the previous claims, wherein said passages (40) have rectangular, square, diamond-shaped, round or hexagonal cross-section.

8. Air-heating module according to any of the previous claims, wherein said passages (40) have a width between 2 and 100 mm, preferably between 5 and 30 mm.

9. Air-heating module according to any of the previous claims, wherein said passages (40) have a depth between 2 and 100 mm, preferably between 5 and 20 mm.

10. Air-heating module according to any of the previous claims, wherein said passages (40) are elongate passages.

11. Air-heating module according to any of the previous claims, wherein said passages (40) are curved or angled.

12. Air-heating module according to claim 1, wherein said fixing means (46) comprises pegs, brackets or clips.

13. Air-heating module according to any of the previous claims, wherein said flow control structure (32) is made of heat insulating material.

14. Air-heating module according to any of the previous claims, wherein said closing element (24) is arranged either upstream or downstream of said heater core (22) and said flow control structure (32) is arranged on a surface of the heater core (22) turned away from said closing elements (24).

## Patentansprüche

1. Luftheizmodul (10), insbesondere für ein Kraftfahrzeug, umfassend:
einen Lufteinlass (12) und einen Luftauslass (16);
einen Heizungskanal (18) zwischen dem Lufteinlass (12) und dem Luftauslass (16), wobei der Heizungskanal (18) einen Heizungswärmetauscher (22) darin umfasst, um Luft zu erwärmen, die durch den Heizungswärmetauscher (22) strömt;
einen Bypasskanal (20) zwischen dem Lufteinlass (12) und dem Luftauslass (16), um den Heizungskanal (18) zu umgehen;
ein Schließelement (24), um zumindest teilweise mindestens einen von dem Heizungskanal (18) und dem Bypasskanal (20) zu sperren;
eine Durchflussregelstruktur (32), die eine Vorderseite (38) und eine Rückseite (36) aufweist, wobei die Rückseite (36) im Wesentlichen parallel zu einer ersten Oberfläche (34) des Heizungswärmetauschers (22) angeordnet ist, der einem offenen Ende des Heizungskanals (18) zugewandt ist; und
mehrere Durchtrittsöffnungen (40), die von der Vorderseite (38) zur Rückseite (36) verlaufen, wobei die Durchtrittsöffnungen (40) eine Tiefe aufweisen, die gleich ihrer Breite ist oder größer als ihre Breite ist, in einer im Wesentlichen senkrechten Richtung zur Rückseite (36) verlaufen und Luft mit minimaler Behinderung in einer zur Rückseite (36) senkrechten Richtung durch die Durchflussregelstruktur (32) strömen lassen;
**dadurch gekennzeichnet, dass**
die Durchflussregelstruktur (32) Befestigungsmittel (46) umfasst, um die Rückseite (36) der Durchflussregelstruktur (32) an der ersten Oberfläche (34) des Heizungswärmetauschers (22) zu befestigen.

2. Luftheizmodul nach Anspruch 1, wobei die Durchflussregelstruktur (32) ein Gitter ist, das mehrere parallele Stäbe in einer ersten Richtung (42) und parallele Stäbe in einer zweiten Richtung (44) umfasst, wobei die erste Richtung nicht parallel zur zweiten Richtung ist, wobei die Durchtrittsöffnungen (40) zwischen den parallelen Stäben (42, 44) ausgebildet sind

3. Luftheizmodul nach Anspruch 2, wobei die erste Richtung senkrecht zur zweiten Richtung ist

4. Luftheizmodul nach Anspruch 2 oder 3, wobei das Gitter (32) mehrere parallele Stäbe in einer dritten Richtung (48) umfasst, wobei die dritte Richtung nicht parallel zur ersten oder zweiten Richtung ist.

5. Luftheizmodul nach Anspruch 1, wobei die Durchflussregelstruktur (32) ein massiver Block mit **dadurch** verlaufenden Durchtrittsöffnungen ist

6. Luftheizmodul nach Anspruch 1, wobei die Durchflussregelstruktur (32) aus mehreren Rohren (50) gebildet ist, die Seite an Seite angeordnet sind

7. Luftheizmodul nach irgendeinem der vorangehenden Ansprüche, wobei die Durchtrittsöffnungen (40) einen rechteckigen, quadratischen, rautenförmigen, runden oder sechseckigen Querschnitt aufweisen

8. Luftheizmodul nach irgendeinem der vorangehenden Ansprüche, wobei die Durchtrittsöffnungen (40) eine Breite zwischen 2 und 100 mm, vorzugsweise zwischen 5 und 30 mm, aufweisen.

9. Luftheizmodul nach irgendeinem der vorangehenden Ansprüche, wobei die Durchtrittsöffnungen (40) eine Tiefe zwischen 2 und 100 mm, vorzugsweise zwischen 5 und 20 mm, aufweisen

10. Luftheizmodul nach irgendeinem der vorangehenden Ansprüche, wobei die Durchtrittsöffnungen (40) längliche Durchtrittsöffnungen sind.

11. Luftheizmodul nach irgendeinem der vorangehenden Ansprüche, wobei die Durchtrittsöffnungen (40) gekrümmt oder gewinkelt sind

12. Luftheizmodul nach Anspruch 1, wobei das Befestigungsmittel (46) Stifte, Halterungen oder Schellen umfasst

13. Luftheizmodul nach irgendeinem der vorangehenden Ansprüche, wobei die Durchflussregelstruktur (32) aus Wärme isolierendem Material besteht.

14. Luftheizmodul nach irgendeinem der vorangehenden Ansprüche, wobei das Schließelement (24) entweder stromaufwärts oder stromabwärts des Heizungswärmetauschers (22) angeordnet ist und die Durchflussregelstruktur (32) an einer Oberfläche des Heizungswärmetauschers (22) abgewandt vom Schließelement (24) angeordnet ist

## Revendications

1. Module de chauffage d'air (10), en particulier pour un véhicule automobile, comprenant :
une entrée d'air (12) et une sortie d'air (16) ;
une conduite de chauffage (18) entre ladite entrée d'air (12) et ladite sortie d'air (16), ladite conduite de chauffage (18) comprenant un radiateur de chauffage (22) dans celle-ci pour chauffer l'air passant à travers ledit radiateur de chauffage (22) ;
une conduite de dérivation (20) entre ladite entrée d'air (12) et ladite sortie d'air (16) pour contourner ladite conduite de chauffage (18) ;
un élément de fermeture (24) pour au moins partiellement bloquer au moins l'une de ladite conduite de chauffage (18) et de ladite conduite de dérivation (20) ;
une structure de commande de flux (32) ayant une face avant (38), une face arrière (36), ladite face arrière (36) étant agencée substantiellement parallèlement à une première surface (34) dudit radiateur de chauffage (22) faisant face à une extrémité ouverte de ladite conduite de chauffage (18), et
une pluralité de passages (40) s'étendant de ladite face avant (38) vers ladite face arrière (36), dans lequel lesdits passages (40) ont une profondeur égale ou supérieure à leur largeur, s'étendent dans une direction substantiellement perpendiculaire à ladite face arrière (36), et laissent l'air circuler, avec une obstruction minimale, à travers ladite structure de commande de flux (32) dans une direction perpendiculaire à ladite face arrière (36)
**caractérisé en ce que**
ladite structure de commande de flux (32) comprend un moyen de fixation (46) pour fixer ladite face arrière (36) de ladite structure de commande de flux (32) contre ladite première surface (34) dudit radiateur de chauffage (22)

2. Module de chauffage d'air selon la revendication 1, dans lequel ladite structure de commande de flux (32) est une grille comprenant une pluralité de barres parallèles dans une première direction (42) et de barres parallèles dans une deuxième direction (44), ladite première direction n'étant pas parallèle à ladite deuxième direction, dans lequel lesdits passages (40) sont formés entre lesdites barres parallèles (42, 44)

3. Module de chauffage d'air selon la revendication 2, dans lequel ladite première direction est perpendiculaire à ladite deuxième direction

4. Module de chauffage d'air selon la revendication 2 ou 3, dans lequel ladite grille (32) comprend une pluralité de barres parallèles dans une troisième direction (48), ladite troisième direction n'étant pas parallèle auxdites première et deuxième directions

5. Module de chauffage d'air selon la revendication 1, dans lequel ladite structure de commande de flux (32) est un bloc compact ayant lesdits passages s'étendant à travers celui-ci.

6. Module de chauffage d'air selon la revendication 1, dans lequel ladite structure de commande de flux (32) est formée d'une pluralité de tubes (50) agencés côte à côte

7. Module de chauffage d'air selon l'une quelconque des revendications précédentes, dans lequel lesdits passages (40) ont une section transversale rectangulaire, carrée, en forme de losange, ronde ou hexagonale

8. Module de chauffage d'air selon l'une quelconque des revendications précédentes, dans lequel lesdits passages (40) ont une largeur entre 2 et 100 mm, préférablement entre 5 et 30 mm

9. Module de chauffage d'air selon l'une quelconque des revendications précédentes, dans lequel lesdits passages (40) ont une profondeur entre 2 et 100 mm, préférablement entre 5 et 20 mm

10. Module de chauffage d'air selon l'une quelconque des revendications précédentes, dans lequel lesdits passages (40) sont des passages allongés.

11. Module de chauffage d'air selon l'une quelconque des revendications précédentes, dans lequel lesdits passages (40) dessinent une courbe ou un angle.

12. Module de chauffage d'air selon la revendication 1, dans lequel ledit moyen de fixation (46) comprend des broches, des supports ou des clips

13. Module de chauffage d'air selon l'une quelconque des revendications précédentes, dans lequel ladite structure de commande de flux (32) est constituée d'un matériau d'isolation thermique

14. Module de chauffage d'air selon l'une quelconque des revendications précédentes, dans lequel ledit élément de fermeture (24) est agencé en amont ou en aval dudit radiateur de chauffage (22) et ladite structure de commande de flux (32) est agencée sur une surface du radiateur de chauffage (22) tournée à l'opposé dudit élément de fermeture (24)
